Europäisches Patentamt

European Patent Office

Office européen des brevets

(19)

(11) Veröffentlichungsnummer: **0 219 021**
**B1**

(12) # EUROPÄISCHE PATENTSCHRIFT

(45) Veröffentlichungstag der Patentschrift:
04.01.89

(21) Anmeldenummer: 86113760.2

(22) Anmeldetag: 03.10.86

(51) Int. Cl.⁴: **B 60 K 11/04,** F 01 P 5/02

(54) **Wärmetauscher, insbesondere Kühler für Kraftfahrzeuge.**

(30) Priorität: 12.10.85 DE 3536457

(43) Veröffentlichungstag der Anmeldung:
22.04.87 Patentblatt 87/17

(45) Bekanntmachung des Hinweises auf die Patenterteilung:
04.01.89 Patentblatt 89/1

(84) Benannte Vertragsstaaten:
DE ES FR GB IT NL SE

(56) Entgegenhaltungen:
EP-A-0 128 878
DE-A-2 233 737
DE-A-2 558 895
DE-A-3 404 887
DE-C-834 158

(73) Patentinhaber: Süddeutsche Kühlerfabrik Julius Fr.
Behr GmbH & Co. KG, Mauserstrasse 3, D-7000
Stuttgart 30 (DE)

(72) Erfinder: Lenz, Werner, Wacholderweg 8, D-7130
Mühlacker (DE)

(74) Vertreter: Wilhelm, Hans- Herbert, Dr.- Ing.,
Wilhelm & Dauster Patentanwälte
Hospitalstrasse 8, D-7000 Stuttgart 1 (DE)

## Beschreibung

Die Erfindung betrifft einen Wärmetauscher, insbesondere einen Kühler für Kraftfahrzeuge, mit einem Rippenrohrblock, je einem damit verbundenen oberen und unteren Wasserkasten, mit Seitenteilen und mit einer Lüfterhaube, die an den Wasserkästen durch Anlageteile gehalten ist, die, zumindest teilweise, die Stege von an den Wasserkästen angebrachten Halterungen formschlüssig hintergreifen.

Wärmetauscher dieser Art sind bekannt (DE-B-2 558 895). Bei diesen Bauarten sind als Halterungen U-förmige Bügel jeweils an der Breitseitenfläche der Wasserkästen vorgesehen, in die von einer Seite her Halterandteile eingreifen, während an der entgegengesetzten Seite der Lüfterhaube eine Verzahnung vorgesehen ist, die in eine am Wasserkasten angeordnete Verzahnung eingreift, und in dieser durch eine Federklammer gehalten ist. Dieser Art der Befestigung setzt das zusätzliche Aufdrücken von Befestigungsklammern voraus.

Es ist die Aufgabe der vorliegenden Erfindung, nach einer Bauart zu suchen, die eine noch einfachere Montage der Lüfterhaube an den Wasserkästen erlaubt.

Erfindungsgemäß wird zu diesem Zweck bei einem Wärmetauscher der eingangs genannten Art vorgesehen, daß die Anlageteile als Rasthaken ausgebildet sind, die am freien Ende von elastischen Laschen angeordnet sind, welche an der Lüfterhaube neben Anschlagflächen angebracht sind, die zur Anlage an einer Gegenfläche der Halterungen dienen. Durch diese Ausgestaltung wird eine Schnappbefestigung zwischen Lüfterhaube und Wasserkästen erreicht. Bei der neuen Ausführung ist es nicht mehr notwendig, die Lüfterhaube gegen den Wasserkasten zu drücken und in ihrer Lage zu halten, ehe die Federklammern aufgesetzt werden können.

Es genügt ein Andrückvorgang, um die Lüfterhaube mit den Wasserkästen bzw. mit dem Wärmetauscher zu verbinden.

Es hat sich dabei als zweckmäßig erwiesen, wenn die Rasthaken jeweils paarweise einander zugeordnet und die Anschlagflächen dazwischen angeordnet sind, weil dann definierte Anlagestellen gebildet werden, die sich auch relativ einfach, insbesondere aus Kunststoff herstellen lassen. Zur Erhöhung der Stabilität dieser Rasteinrichtung ist es zweckmäßig, wenn die mit den Rasthaken versehenen Laschen von Wandpaaren abstehen, die mit senkrecht dazu verlaufenden Wandpaaren einen vom Rand der Lüfterhaube abstehenden Hohlzapfen bilden. Die Anschlagflächen können dann die Außenseiten von quer zu den Laschen verlaufenden Stegen sein, die mit den senkrecht zu den Laschen angeordneten Wandpaaren fest verbunden, insbesondere auch einstückig, hergestellt sind.

Es hat sich als zweckmäßig und ausreichend erwiesen, wenn die Rasthakenpaare jeweils den gegenüberliegenden, oberen und unteren Bereichen des umlaufenden Randes der Lüfterhaube zugeordnet sind und wenn die Seitenflächen der Laschen der gegenüberliegenden Rasthakenpaare unter einem Winkel von 90° zueinander verlaufen. Durch diese Ausgestaltung, insbesondere in Zusammenhang mit den Merkmalen des Anspruches 9, kann eine weitgehende Sicherung der Lüfterhaube gegen ein Verschieben in beiden Richtungen parallel zur Luftdurchtrittsfläche erreicht werden, ohne daß jedoch zu enge Toleranzen eingehalten werden müssen, welche die Herstellung verteuern könnten. Insbesondere können Wärmedehnungen des Kühlers aufgenommen werden.

Vorteilhaft ist es schließlich auch noch, wenn die Lüfterhaube auf den nicht mit Rasthaken versehenen, gegenüberliegenden Seiten mit aus der Ebene des umlaufenden Randes zum Wärmetauscher hin vorspringenden Klauen versehen ist, welche die Seitenteile hintergreifen.

Die Erfindung ist in der Zeichnung anhand von einem Ausführungsbeispiel dargestellt und wird im folgenden erläutert. Es zeigen:

Fig. 1　die schematische Frontansicht eines neuen Wärmetauschers mit daran befestigter Lüfterhaube von der Lüfterhaube her gesehen,

Fig. 2　den vergrößerten Teilschnitt durch die Ausführung der Fig. 1 längs der Linie II - II,

Fig. 3　den vergrößerten Teilschnitt längs der Linie III - III,

Fig. 4　den Teilschnitt längs der Linie IV - IV,

Fig. 5　den Schnitt längs der Linie V - V und

Fig. 6　den Schnitt längs der Linie VI - VI in Fig. 1.

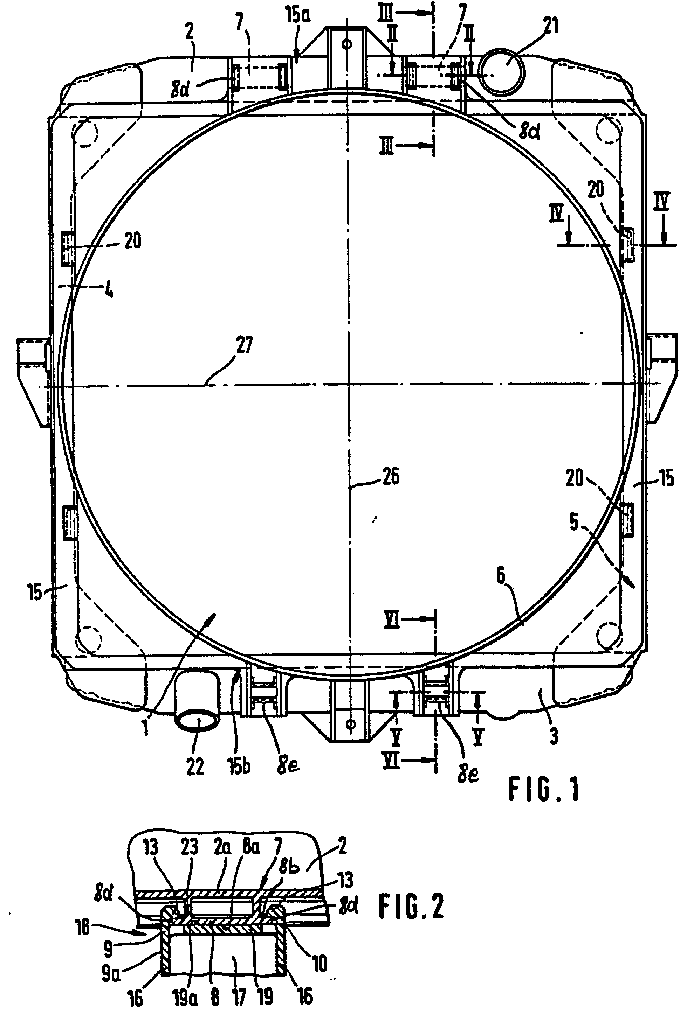

In der Fig. 1 ist ein von einem oberen Wasserkasten 2 und von einem unteren Wasserkasten 3 in bekannter Weise begrenzter Rippenrohrblock 1 eines Kraftfahrzeugkühlers angedeutet, der in nicht näher gezeigter, weil bekannter Weise, aus parallel zueinander verlaufenden Rohren mit quer dazu angeordneten Rippen besteht, wobei die Enden der Rohre in den Böden der Wasserkästen gehalten sind. Im oberen Wasserkasten 2 ist ein Zulauf 21 für das Motor-Kühlwasser und im unteren Wasserkasten 3 ein Ablauf 22. Die oberen und unteren Wasserkästen 2 und 3 sind seitlich von je einem Seitenteil 4 und 5 eingerahmt, die in nicht näher dargestellter Weise fest mit den beiden Wasserkästen verbunden sind.

Frontal vor dem Rippenrohrblock 1 ist eine Lüfterhaube 6 aufgesetzt, die mit dem oberen und dem unteren Wasserkasten 2 bzw. 3 verbunden ist. Dies geschieht dadurch, daß sowohl der obere als auch der untere Wasserkasten 2 bzw. 3 mit Bügeln 7 versehen sind, deren Stege 8 seitlich über die senkrecht von der Wand 2a des Wasserkastens 2 bzw. 3 jeweils abstehenden Schenkel 23 nach außen überstehen, so daß sie, wie Fig. 2 beispielsweise zeigt, in diesem überstehenden Bereich Rastflächen 8b bilden, die auf der zum Wasserkasten 2 bzw. 3 gewandten Seite liegen und von Rasthaken 13 hintergriffen werden können, die am freien Ende von Laschen 9 bzw. 10 vorgesehen sind, die Teil eines Hohlzapfens 18 sind, der fest mit der Lüfterhaube 6 verbunden ist.

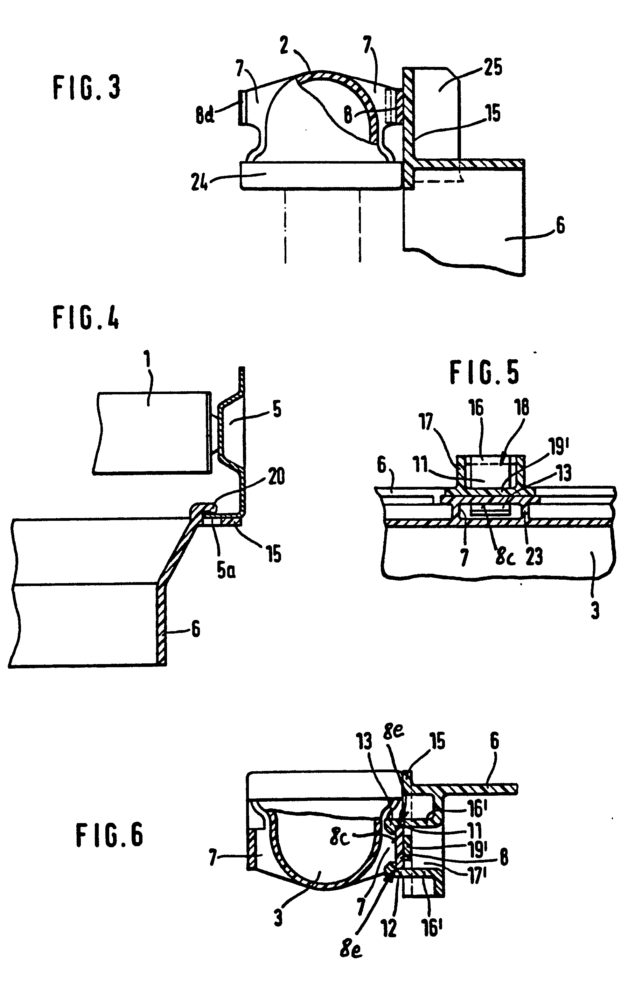

Fig. 3 zeigt, daß die Bügel 7 auf beiden Seiten des Wasserkastens 2 abstehen, so daß die Lüfterhaube 6 an beliebigen Seiten angesetzt werden kann und die jeweils freien Bügel 7 zur Befestigung anderer zusätzlicher Teile oder des Wärmetauschers selbst dienen können. Die Lüfterhaube 6 besitzt einen umlaufenden Rand, der sich oben an dem umgebördelten Rand 24 des Wasserkastens 2 und an der Außenseite 8a (siehe Fig. 2) des Steges 8 des Bügels 7 anlegt. Von diesem Rand 15 bzw. von entsprechenden Verstärkungsrippen 25 aus, stehen die Wände 16 und in deren Verlängerung die Laschen 9 und 10 ab. Die Wände 16 bilden mit senkrecht dazu verlaufenden Wänden 17 den Hohlzapfen 18, wobei zwischen den Wänden 17 der Steg 19 verläuft, gegenüber dem die Laschen 9 und 10 elastisch bewegbar sind.

In ähnlicher Weise ist die am unteren Wasserkasten 3 vorgesehene Befestigung für die Lüfterhaube 6 ausgebildet. Auch dort sind, wie auch am oberen Wasserkasten 2, jeweils symmetrisch zu der Längsmittelebene 26 des Kühlers zwei Befestigungsstellen angeordnet, die identisch ausgebildet und daher nur einmal beschrieben sind.

Auch am unteren Wasserkasten 3 sind Bügel 7 vorgesehen, die mit Stegen 8 versehen sind. Die Ausführung der Bügel 7 entspricht den Bügeln 7 am oberen Wasserkasten 2. Unterschiedlich ist hier, daß der Steg 8 des Bügels nicht an seinen beiden über die Schenkel 23 nach außen überstehenden Teilen von den Rasthaken 13 hintergriffen wird, sondern in einer um 90° dazu versetzten Richtung, weil die Laschen 11 und 12, die wieder in der Verlängerung von Wänden 16' angeordnet sind, zwar ebenfalls vom Bereich des Randes 15 der Lüfterhaube 6 abstehen, mit ihren Seitenflächen aber senkrecht zu den Seitenflächen der Laschen 9 und 10 am oberen Wasserkasten angeordnet sind. Auf diese Weise hintergreifen die Rasthaken 13 der Laschen 11 und 12 den jeweils zugeordneten Steg 8 der Bügel 7 seitlich im Bereich zwischen den Schenkeln 23 der Bügel 7. Die sich zwischen den Laschen 11 und 12 erstreckenden Stegteile 19' sind wiederum einstückig mit Wänden 17, die senkrecht zu den Wänden 16 verlaufen verbunden, in deren Verlängerung die Laschen 11 bzw. 12 liegen.

Die Bügel 7 am oberen Wasserkasten 2 bilden dabei jeweils auf der den Wasserkästen zugewandten Seite Rastflächen 8b, wie aus Fig. 2 ersichtlich ist. Die Rastflächen 8b liegen in dem Bereich, in dem der Steg 19 des Bügels 7 über die Schenkel 23 übersteht.

Die Rastflächen 8b werden nach außen von den Rastkanten 8d begrenzt, die von den Rasthaken 13 der Laschen 9 und 10 der Haube 6 umgriffen werden.

Die Bügel 7 am unteren Wasserkasten 3 bilden analoge Rastflächen 8c für die Rasthaken 13 der Laschen 11 und 12 im unteren Bereich der Haube 6, die in Fig. 6 erkennbar sind. Diese Rastflächen 8c werden von Rastkanten 8e begrenzt, hinter die die Rasthaken 13 greifen. Die Rastkanten 8d an den Bügeln des oberen Wasserkastens 2 und die Rastkanten 8e an denen des unteren Wasserkastens 3 verlaufen längs Geraden, die unter einem Winkel von 90° zueinander stehen. Durch diese gegeneinander versetzten Rastbefestigungen wird eine Sicherung der Lüfterhaube 6 gegen Verschieben in einer parallel zur Luftdurchtrittsfläche verlaufenden Richtung erreicht weden. Wärmedehnungen des Kühlers können außerdem aufgenommen werden.

Aus den Figuren wird deutlich, daß durch diese Ausgestaltung eine Rastbefestigung durch die Rasthaken 13 möglich ist, welche den zugeordneten Steg 8 der Bügel 7 entweder außen oder im Bereich innerhalb der Schenkel des Bügels hintergreifen. Die eindeutige Lagefixierung wird erreicht durch die Anlage der Außenseite 19a des Steges 19 an der Außenseite 8a des Steges 8 des Bügels bzw. durch die entsprechende Anlage der Flächen von Steg 8 und Steg 19'.

Zweckmäßig ist es, wenn an dem vom oberen Bereich 15a und unteren Bereich 15b des umlaufenden Randes 15 abgewandten beiden Seiten, d. h. also an dem Teil des Randes 15, der den Seitenteilen 4 und 5 gegenüberliegt, aus der Ebene des Randes 15 nach innen zum Rippenrohrblock 1 gerichtete Klauen 20 vorgesehen sind, die sich hinter einen parallel zum Rand 15 verlaufenden Rand 5a des Seitenteiles 5 und analog hinter einen entsprechenden Rand des Seitenteiles 4 legen. Auch hier sind parallel zu der horizontal verlaufenden Mittelebene 27 des Kühlers symmetrisch zwei Klauen 20 vorgesehen, die zusammen mit den Rasthakenbefestigungen für einen eindeutigen klapperfreien Sitz der Lüfterhaube am Kühler sorgen.

**Patentansprüche**

1. Wärmetauscher, insbesondere Kühler für Kraftfahrzeuge, mit einem Rippenrohrblock (1), je einem damit verbundenen oberen und unteren Wasserkasten (2, 3), mit Seitenteilen (4, 5) und mit einer Lüfterhaube (6), die an den Wasserkästen durch Anlageteile (13) gehalten ist, die, zumindest teilweise, Stege (8) von an den Wasserkästen angebrachten Halterungen (7) formschlüssig hintergreifen, dadurch gekennzeichnet, daß die Anlageteile als Rasthaken (13) ausgebildet sind, die am freien Ende von elastischen Laschen (9, 10, 11, 12) angeordnet sind, welche an der Lüfterhaube (6) neben Anschlagflächen (19a, 19a') angebracht sind, die zur Anlage an einer Gegenfläche (8a) der Halterungen (7) dienen.

2. Wärmetauscher nach Anspruch 1, dadurch gekennzeichnet, daß die Rasthaken (13) jeweils paarweise einander zugeordnet und die Anschläge (19, 19') dazwischen angeordnet sind.

3. Wärmetauscher nach den Ansprüchen 1 und 2, dadurch gekennzeichnet, daß die mit den Rasthaken (13) versehenen Laschen (9, 10, 11, 12) von Wandpaaren (16, 16') abstehen, die mit senkrecht dazu verlaufenden Wandpaaren (17, 17') einen am Rand (15) der Lüfterhaube (6) abstehenden Hohlzapfen (18) bilden.

4. Wärmetauscher nach Anspruch 3, dadurch gekennzeichnet, daß die Anschlagflächen die Außenflächen (19a, 19'a) von quer zu den Laschen (9, 10) bzw. (11, 12) verlaufenden, mit den senkrecht zu den Laschen angeordneten Wandpaaren (17, 17') fest verbundenen Stegen (19, 19') sind.

5. Wärmetauscher nach den Ansprüchen 1 bis 4, dadurch gekennzeichnet, daß die Rasthakenpaare jeweils den gegenüberliegenden oberen und unteren Bereichen (15a, 15b) des umlaufenden Randes (15) der Lüfterhaube (6) zugeordnet sind.

6. Wärmetauscher nach Anspruch 5, dadurch gekennzeichnet, daß die Seitenflächen (9a) der Laschen (9, 10) bzw. (11, 12) der gegenüberliegenden Rasthakenpaare (13) unter einem Winkel von 90° zueinander verlaufen.

7. Wärmetauscher nach den Ansprüchen 1 und 5, dadurch gekennzeichnet, daß die Lüfterhaube (6) auf den nicht mit Rasthaken (13) versehenen, gegenüberliegenden Seiten mit aus der Ebene des umlaufenden Randes (15) zum Wärmetauscher hin vorspringenden Klauen (20) versehen ist, die die Seitenteile (4, 5) hintergreifen.

8. Wärmetauscher nach Anspruch 1, dadurch gekennzeichnet, daß die Halterungen als Bügel (7) mit an den Wasserkästen (2, 3) angebrachten Schenkeln (23) ausgebildet sind, deren Stege (8) auf der zum Wasserkasten hin gewandten Seite Rastflächen (8b) für die Rasthaken (13) aufweisen.

9. Wärmetauscher nach Anspruch 8, dadurch gekennzeichnet, daß die Stege (8) die Schenkel (23) nach außen überragen und sowohl zwischen den Schenkeln (23), als auch außerhalb derselben Rastflächenpaare (8b, 8c) mit Rastkanten (8d, 8e) aufweisen, die gegeneinander um 90° versetzt sind.

## Claims

1. Heat exchanger, particularly a radiator for motor vehicles, with a finned tune block (1) and connected thereto an upper and a lower water tank (2, 3), with lateral parts (4, 5) and with a fan housing (6) supported on the water tanks by mounting parts (13) which at least partly engage in form-locking fashion behind the webs (8) of supports (7) mounted on the water tanks, characterised in that the mounting parts are constructed as hooks (13) disposed on the free ends of resilient strips (9, 10, 11, 12) mounted on the fan housing (6) alongside abutment faces (19a, 19a') which serve to bear on a matching surface (8a) on the supports (7).

2. Heat exchanger according to Claim 1, characterised in that the hooks (13) are in each case disposed in pairs, the abutments (19, 19') being disposed between them.

3. Heat exchanger according to Claims 1 and 2, characterised in that the strips (9, 10, 11, 12) provided with the hooks (13) stand away from pairs of walls (16, 16') which, with pairs of walls (17, 17') which extend at a right angle to them, form a hollow stud (18) projecting from the edge (15) of the fan housing (6).

4. Heat exchanger according to Claim 3, characterised in that the abutment faces are the outside faces (19a, 19'a) of webs (19, 19') which are rigidly connected to the pairs of walls (17, 17') which are disposed at right angles to the strips and which extend transversely to the strips (9, 10) or (11, 12).

5. Heat exchanger according to Claims 1 to 4, characterised in that the pairs of hooks are in each case associated with the oppositely disposed upper and lower portions (15a, 15b) of the encircling rim (15) of the fan housing (6).

6. Heat exchanger according to Claim 5, characterised in that the side faces (9a) of the strips (9, 10) or (11, 12) of the oppositely disposed pairs of hooks (13) extend at an angle of 90° to one another.

7. Heat exchanger according to Claims 1 and 5, characterised in that the fan housing (6), on the opposite sides which are not provided with hooks (13) is provided with claws (20) projecting towards the heat exchanger and out of the plane of the encircling rim (15), the said claws (20) engaging behind the side parts (4, 5).

8. Heat exchanger according to Claim 1, characterised in that the support means are constructed as stirrup-shaped members (7) having arms (23) mounted on the water tanks (2, 3) and of which the webs (8) have on the side facing the water tank locking faces (8b) for the hooks (13).

9. Heat exchanger according to Claim 8, characterised in that the webs (8) project outwardly beyond the arms (23) and have both between the arms (23) and also outside of them pairs of locking faces (8b, 8c) with locking edges (8d, 8e) which are offset by 90° in respect of one another.

## Revendications

1. Echangeur de chaleur, notamment radiateur pour véhicules automobiles, comprenant un bloc de tubes ailetés (1), des réservoirs d'eau (2, 3) supérieur et inférieur, reliés à ce bloc, des parties latérales (4, 5) et un carénage de ventilateur (6) fixé aux réservoirs d'eau par des parties de montage (13) qui sont engagées au moins partiellement, et en formant des liaisons par obstacle, derrière des barrettes (8) d'attaches (7) montées sur les réservoirs d'eau, caractérisé en ce que les parties de montage sont constituées par des crochets à encliquetage (13) qui sont disposés à l'extrémité libre de pattes élastiques (9, 10, 11, 12), lesquelles sont prévues sur le carénage de ventilateur (6) à côté de surfaces de butée (19a, 19a') qui servent à donner appui contre une contre-surface (8a) des attaches (7).

2. Echangeur de chaleur selon la revendication 1, caractérisé en ce que les crochets à encliquetage (13) sont associés par paires et les butées (19, 19') sont disposées entre les crochets.

3. Echangeur de chaleur selon les revendications 1 et 2, caractérisé en ce que les pattes (9, 10, 11, 12) munies des crochets à encliquetage (13) font saillie sur des paires de parois (16, 16') qui forment, avec des paires de parois (17, 17') s'étendant perpendiculairement aux premières, un téton creux (18) qui fait saillie sur le rebord (15) du carénage de ventilateur (6).

4. Echangeur de chaleur selon la revendication 3, caractérisé en ce que les surfaces de butée sont les surfaces extérieures (19a, 19'a) de barrettes (19, 19') qui s'étendent transversalement aux pattes (9, 10) ou (11, 12), et qui sont reliées solidairement aux paires de parois (17, 17') disposées perpendiculairement aux pattes.

5. Echangeur de chaleur selon les revendications 1 à 4, caractérisé en ce que les paires de crochets à encliquetage sont associées respectivement aux régions supérieures et inférieures opposées (15a, 15b) du rebord périphérique (15) du carénage (6) du ventilateur.

6. Echangeur de chaleur selon la revendiation 5, caractérisé en ce que les surfaces latérales (9a) des pattes (9, 10) et (11, 12) des paires de crochets à encliquetage (13) opposées forment entre elles des angles de 90°.

7. Echangeur de chaleur selon les revendications 1 et 5, caractérisé en ce que le carénage de ventilateur (6) est muni, sur les côtés opposés qui ne sont pas munis de crochets à encliquetage (13), de griffes (20) qui font saillie vers l'échangeur de chaleur en sortant du plan du rebord périphérique (15) et qui s'accrochent derrière les parties latérales (4, 5).

8. Echangeur de chaleur selon la revendication 1, caractérisé en ce que les attaches sont constituées par des étriers (7) comportant des branches (23) prévues sur les réservoirs d'eau (2, 3), et dont les barrettes transversales (8) présentent, sur la face qui regarde vers le réservoir d'eau, des surfaces d'encliquetage (8b) qui reçoivent les crochets à encliquetage (13).

9. Echangeur de chaleur selon la revendication 8, caractérisé en ce que les barrettes transversales (8) débordent à l'extérieur au-delà des branches (23) et présentent aussi bien entre les branches (23) qu'en dehors de ces branches, des paires de surfaces d'encliquetage (8b, 8c) munies d'arêtes d'encliquetage (8d, 8e) qui sont décalées de 90° les unes par rapport aux autres.

EP 0 219 021 B1

FIG.1

FIG.2

FIG.3

FIG.4

FIG.5

FIG.6